# EUROPÄISCHE PATENTSCHRIFT

(11) **EP 1 171 734 B1**
(45) Veröffentlichungstag und Bekanntmachung des Hinweises auf die Patenterteilung: **27.08.2003**
(21) Anmeldenummer: 00916748.7
(22) Anmeldetag: 15.02.2000
(51) Int. Cl.: F16L 55/38

(54) **VORRICHTUNG UND VERFAHREN ZUR INSPEKTION VON HOHLRÄUMEN**
DEVICE AND METHOD FOR INSPECTING HOLLOW SPACES
DISPOSITIF ET PROCEDE D'INSPECTION DE CAVITES

(30) Priorität: 16.04.1999 DE 19917150
(43) Veröffentlichungstag der Anmeldung: 16.01.2002
(73) Patentinhaber: Oberdorfer, Hans, 90449 Nürnberg (DE)
(72) Erfinder: Oberdorfer, Hans, 90449 Nürnberg (DE)
(74) Vertreter: Rauh, Helga
(86) Internationale Anmeldenummer: DE0000429
(87) Internationale Veröffentlichungsnummer: WO00063607

(56) Entgegenhaltungen:
- WO-A-95/03526
- DE-A- 4 426 939
- FR-A- 2 768 214

## Beschreibung

Die Erfindung betrifft eine Vorrichtung und ein Verfahren zur Inspektion von Hohlräumen mit den Merkmalen des Oberbegriffs des Anspruchs 1.

Aus der DE-C-40 31 715, der DE-A-38 03 274, der DE-U-91 05 211 und der DE-C-42 29 787 sind Verfahren und Vorrichtungen zur Inspektion von Kanälen mittels Bildübertragung bekannt, bei denen mit Hilfe eines Fahrwagens im Hauptkanalrohr ein zweites Kamerasystem in abzweigende Rohre eingeführt werden kann. Es sind auch Düsen aus der Kanalreinigungstechnik bekannt, die durch entsprechende Anordnung der Austrittsöffnungen die erforderliche Schubkraft liefern, um einen Versorgungsschlauch mitzuziehen. Ferner ist bekannt, daß diese Rohrreinigungsdüsen auch als Antniebselement zu Einbringung von Inspektionskameras benutzt werden. Die bisherigen Techniken lassen jedoch die Inspektion sehr langer, klein dimensionierter Leitungen nicht zu, bei der eine mit Rädern angetriebene Kamera nicht mehr in der Lage ist, das Kabel zu ziehen. Auch können diese Techniken Hindernisse nicht umfahren und abzweigende Leitungen sind nur schwer zu inspizieren. Das oben genannte Verfahren, zwei Kameras in die Abzweigungen einzuführen, löst zwar das Problem der Inspektion solcher Abzweigungen, aber auch hier können Hindernisse nicht überwunden werden. Zudem besteht hier ein erhöhter technischer und personeller Aufwand, da zwei Kamerasysteme überwacht werden müssen. Eine Sonde mit Rückstoßdüsen ist aus der DE-A-44 26 939 bekannt. Durch Drosselung einzelner Düsen kann diese Sonde gesteuert werden und ist in der Lage, auch in Seitenkanäle einzufahren. Die Drosselung bewirkt jedoch gleichzeitig einen Verlust an Schubkraft.

Aufgabe der vorliegenden Erfindung ist es daher, eine Vorrichtung und ein Verfahren zur Inspektion von Hohlräumen wie Kanälen und dergleichen zu schaffen, mit denen mit einem, eine Kamera tragenden Grundkörper auch in Abzweigungen fahren zu können und mit dem Hindernisse überwunden werden können. Eine weitere Aufgabe besteht darin, mit der erfindungsgemäßen Vorrichtung auch in großen Behältern oder Bauwerken jeden gewünschten Punkt anfahren zu können.

Diese Aufgabe wird mit den im kennzeichnenden Teil des Anspruchs 1 genannten Merkmalen gelöst. Fortbildungen und vorteilhafte Ausführungen der Erfindung sind in den weiteren Ansprüchen umfaßt.

Erfindungsgemäß ist eine Vorrichtung zur Inspektion von Hohlräumen wie Rohren, Kanälen, Bauwerken oder Behältern, bestehend aus einer Sonde mit eingebauter Kamera, deren Objektiv zu einem vorderen Ende eines Grundkörpers der Sonde hin ausgerichtet ist, einer Schlauchzuleitung für ein flüssiges oder gasförmiges Medium zu der Sonde, die an dem hinteren Ende des Grundkörpers der Sonde angeschlossen ist, einer Versorgungseinheit für die Schlauchzuleitung außerhalb des Einsatzortes der Sonde, wenigstens einer Austrittsdüse für das Medium an der Sonde, sowie Übertragungsmitteln zwischen der Kamera und einer Auswertungs- und/oder Wiedergabeeinheit, dadurch gekennzeichnet, daß an dem Umfang des Grundkörpers zwischen dessen vorderen und hinteren Ende mindestens drei drehbare Austrittsdüsen für das Medium angeordnet sind, wobei die Strahlachse des Mediums in einem Winkel von 0° bis 45° von der Längsmittelachse zwischen vorderem und hinterem Ende des Grundkörpers abgewinkelt ist.

Vorzugsweise sind vier drehbare Austrittsdüsen vorhanden, deren Drehachsen um jeweils 90° quer zu der Längsmittelachse des Grundkörpers versetzt sind. Vorzugsweise sind die Austrittsdüsen in einem Radius von 360° drehbar und werden von wenigstens einem elektrischen Stellmotor angetrieben werden.

Zwischen dem Stellmotor und einer Steuerungseinheit außerhalb des zu inspizierenden Hohlraums ist ein Steuer- und Stromzuführungskabel angeordnet .

Die drehbaren Austrittsdüsen sind vorzugsweise scheibenförmig oder flachkonisch ausgebildet und auf rechtwinklig zueinander angeordneten Achsen drehfest gelagert. Die Austrittsöffnungen der Düsen sind vorzugsweise jeweils auf dem Umfang der Scheibe, bzw. des Flachkonus angeordnet.

Die Achsen sind vorteilhafterweise als Hohlachsen für den Transport des Mediums von der Schlauchzuleitung zu den Austrittsdüsen ausgebildet und die Strahlachsen des Mediums aus den Austrittsöffnungen sind jeweils auf die Längsmittelachsen der Hohlachsen ausgerichtet.

Nach einer besonderen Ausführung der Erfindung ist die Sonde mit einem Gyrometer ausgestattet. Nach weiteren vorteilhaften Ausbildungen der Erfindung sind neben der Kamera weitere Prüf-, Meßgeräte und/oder Sensoren in oder an dem Grundkörper angeordnet.

Ein erfindungsgemäßes Verfahren zur Inspektion von Hohlräumen wie Rohren, Kanälen, Bauwerken oder Behältern,
besteht aus den Schritten:
anschließen einer Sonde nach den Ansprüchen 1 bis 11 mittels einer Schlauchzuleitung an eine Versorgungseinheit mit einem flüssigen oder gasförmigen Medium,
Einführen der Sonde in den zu inpizierenden Hohlraum,
Beaufschlagen der Sonde mit einem unter Druck stehenden Medium,
Steuern der drehbaren Düsen über das Steuerkabel so daß sich einerseits die Sonde im freien Raum hält und andererseits eine Rückstoßkraft entwickelt wird, Vortreiben der Sonde in den jeweiligen Hohlraum und Auswerten der Ergebnisse.

Im folgenden wird die Erfindung anhand von Zeichnungen beispielhaft näher beschrieben. Dabei zeigen:
Fig. 1 einen Schnitt durch den Grundkörper 1.0 mit einer Darstellung des Druckmittelverlaufs;
Fig. 2 eine Draufsicht auf den Grundkörper von Fig 1;
Fig. 3 eine perspektivische Ansicht des Grundkörpers von Fig. 1 und Fig. 2.

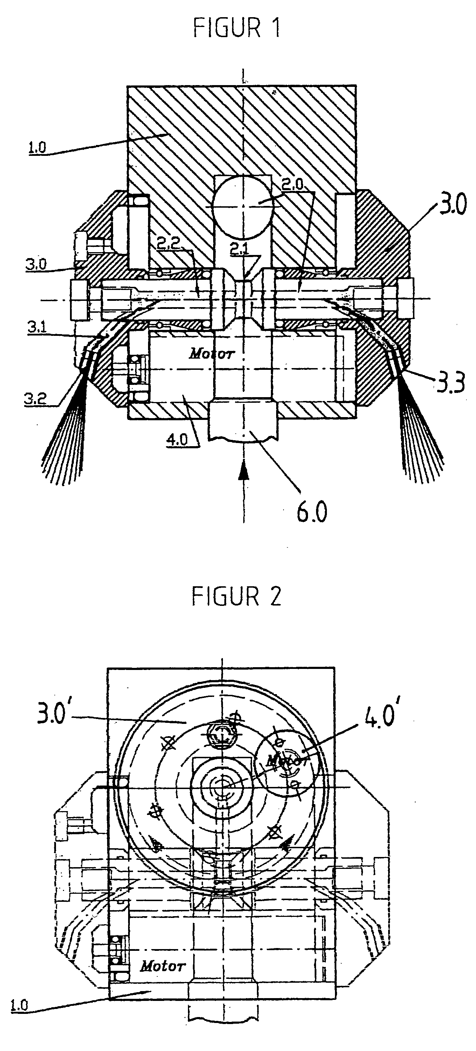

Gemäß Fig. 1 wird die Kamerasonde von vorzugsweise vier Drehdüsen bewegt, wobei jeweils zwei gegenüberliegende Drehdüsen 3.0, 3.0 und 3.0', 3.0' über eine Achse 2.0 fest verbunden sind und durch diese mit dem Druckmedium versorgt werden. Über einen druckfesten Schlauch gelangt ein sehr verdichtetes oder gasförmiges Medium an den Anschluß 6.0 des Grundkörpers 1.0. Diese Anschlußbohrung 6.0 führt weiter bis über die im rechten Winkel zueinander stehenden Achsen 2.0 der Drehdüsen 3.0, 3.0', die hierfür als Hohlachsen ausgelegt sind, zu den flachkonischen Drehdüsen 3.0, 3.0' und dort über Versorgungsbohrungen 2.1 (Bohrung der Hohlachse) und 3.1 (abgewinkelte Zuführung in der Drehdüse) zu den Austrittsöffnungen 3.3 an dem konischen Umfang der Drehdüsen 3.0, 3.0'. Die Austrittsöffnungen 3.3 auf dem konischen Umfang der Drehdüsen 3.0, 3.0' sind so angeordnet, daß die Strahlachsen 3.2 der Düsen sich mit dem geometrischen Mittelpunkt der Achsen 2.0 treffen. Dies hat zur Folge, daß der Antrieb für die Drehbewegung von den beträchtlichen Vorschubkräften vollkommen entkoppelt wird. Dies ist erforderlich, damit keine dynamischen Kräfte auf die Stellmotoren 4.0 wirken, bzw. beim Stellvorgang überwunden werden müssen und dadurch die Antriebseinheit sehr klein gewählt werden kann. Die Stellmotoren 4.0 sind kleine Elektromotoren die sowohl so angeordnet werden können, daß vier Motoren jeweils eine Drehdüse antreiben, wobei der Aufbau aber auch so gewählt werden kann, daß ein Motor mit Umschaltgetriebe zwei Drehdüsen gleichzeitig antreibt. Sinnvoll ist es dabei, den Grundkörper 1.0, die Achsen 2.0 und die Drehdüsen 3.0 symmetrisch anzuordnen, denn dadurch subtrahieren sich die Seitenkräfte, was ebenfalls zur Reduzierung der Stellenergie beiträgt. Die Motoren werden über Kabel (nicht gezeigt) versorgt und angesteuert. Fig. 2 läßt erkennen, wie das zweite Drehdüsenpaar 3.0' mit ihren zugeordneten Motoren 4.0 rotationssymmetrisch versetzt zu dem ersten Drehdüsenpaar 3.0 an dem Grundkörper 1.0 angeordnet ist.

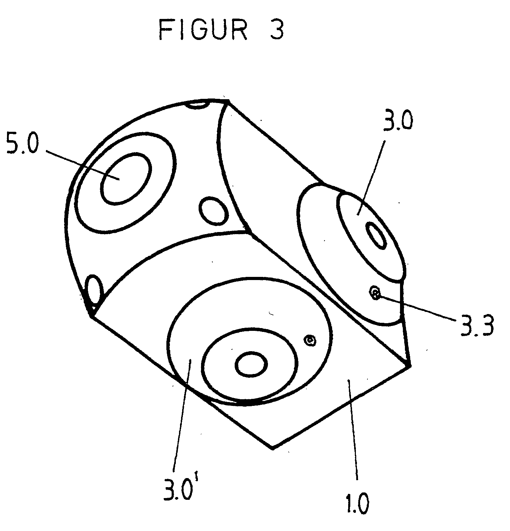

Fig. 3 zeigt zum besseren Verständnis der geometrische Form den Grundkörper 1.0 in einer perspektivischen Darstellung, wobei Schlauchzuführung und Kabel weggelassen sind. Der Grundkörper 1.0 hat einen im wesentlichen rechteckigen Querschnitt und trägt auf einem vorderen, leicht gewölbten Ende das Kameraauge 5.0 der eingebauten Kamera, die über Kabel oder kabellose Bilder nach außerhalb liefert. An den vier Seitenflächen des Grundkörpers 1.0 befinden sich die rotationssymmetrisch zueinander versetzten Drehdüsenpaare 3.0 und 3.0' mit ihren jeweiligen Austrittsöffnungen 3.3.

Bei Betrieb mit einem gasförmigen Druckmedium und der Kontrolle von großvolumigen Behältern wird die Servosteuerung von einem präzisen Gyro unterstützt. Damit ist es möglich, absolut ruhig den gewünschten Zielpunkt anzusteuern.

## Patentansprüche

1. Vorrichtung zur Inspektion von Hohlräumen wie Rohren, Kanälen, Bauwerken oder Behältern, bestehend aus einer Sonde aus einem Grundkörper (1.0) mit einem vorderen und einem hinteren Ende, die eine eingebaute Kamera (5.0) besitzt, deren Objektiv zu dem vorderen Ende des Grundkörpers (1.0) hin ausgerichtet ist,
einer Schlauchzuleitung für ein flüssiges oder gasförmiges Medium, die an dem hinteren Ende des Grundkörpers der Sonde angeschlossen ist,
einer Versorgungseinheit für die Schlauchzuleitung außerhalb des Einsatzortes der Sonde,
wenigstens einer Austrittsdüse (3.0) für das Medium an der Sonde, sowie Übertragungsmitteln zwischen der Kamera und einer Auswertungsund/oder Wiedergabeeinheit,
**dadurch gekennzeichnet,**
**daß** an dem Umfang des Grundkörpers (1.0) zwischen dessen vorderen und hinteren Ende mindestens drei drehbare Austrittsdüsen (3.0) für das Medium angeordnet sind, wobei die Strahlachse des Mediums in einem Winkel von 0° bis 45° von der Längsmittelachse zwischen vorderem und hinterem Ende des Grundkörpers abgewinkelt ist.

2. Vorrichtung nach Anspruch 1,
**dadurch gekennzeichnet,**
**daß** vier drehbare Austrittsdüsen (3.0, 3.0') vorhanden sind, deren Drehachsen um jeweils 90° quer zu der Längsmittelachse des Grundkörpers versetzt sind.

3. Vorrichtung nach Anspruch 1 oder 2,
**dadurch gekennzeichnet,**
**daß** die Austrittsdüsen in einem Radius von 360° drehbar sind.

4. Vorrichtung nach einem der vorhergehenden Ansprüche,
**dadurch gekennzeichnet,**
**daß** die drehbaren Austrittsdüsen von wenigstens einem elektrischen Stellmotor (4.0) angetrieben werden.

5. Vorrichtung nach Anspruch 4,
**dadurch gekennzeichnet,**
**daß** zwischen dem Stellmotor (4.0) und einer Steuerungseinheit ein Steuer- und Stromzuführungskabel angeordnet ist.

6. Vorrichtung nach einem der Ansprüche 2 bis 5,
**dadurch gekennzeichnet,**
**daß** die drehbaren Austrittsdüsen (3.0, 3.0') scheibenförmig oder flachkonisch ausgebildet sind und aufrechtwinklig zueinander angeordneten Achsen drehfest gelagert sind, wobei ihre Austrittsöffnungen (3.3) jeweils auf dem Umfang der Scheibe oder des Flachkonus angeordnet sind.

7. Vorrichtung nach Anspruch 6,
**dadurch gekennzeichnet,**
**daß** die Achsen (2.0) Hohlachsen (2.1) für den Transport des Mediums von der Schlauchzuleitung zu den Austrittsdüsen sind.

8. Vorrichtung nach Anspruch 7,
**dadurch gekennzeichnet,**
**daß** die Strahlachsen des Mediums aus den Austrittsöffnungen (3.3) jeweils auf die Längsmittelachsen der Hohlachsen ausgerichtet sind.

9. Vorrichtung nach einem der Ansprüche 5 bis 8,
**dadurch gekennzeichnet,**
**daß** die Sonde mit einem Gyrometer ausgestattet ist.

10. Vorrichtung nach einem der vorhergehenden Ansprüche,
**dadurch gekennzeichnet,**
**daß** neben der Kamera weitere Prüf-, Meßgeräte und/oder Sensoren in oder an dem Grundkörper angeordnet sind.

11. Verfahren zur Inspektion von Hohlräumen wie Rohren, Kanälen, Bauwerken oder Behältern,
bestehend aus den Schritten:
anschließen einer Sonde nach den Ansprüchen 1 bis 10 mittels einer Schlauchzuleitung an eine Versorgungseinheit mit einem flüssigen oder gasförmigen Medium,
Einführen der Sonde in den zu inspizierenden Hohlraum,
Beaufschlagen der Sonde mit einem unter Druck stehenden Medium,
Steuern der drehbaren Düsen über das Steuerkabel so daß sich einerseits die Sonde im freien Raum hält und andererseits eine Rückstoßkraft entwickelt wird, Vortreiben der Sonde in den jeweiligen Hohlraum und Auswerten der Ergebnisse.

## Claims

1. A device for inspecting hollow spaces such as pipes, conduits, structures or receptacles, consisting of a probe composed of a base body (1.0) with a front and a rear end, which probe is equipped with a built-in camera (5.0), the lens of which is oriented towards the front end of the base body (1.0), a flexible supply line for a fluid or gaseous medium, which is connected to the rear end of the base body of the probe,
a supply unit for the flexible supply line outside the site of application of the probe,
at least one exit nozzle (3.0) for the medium on the probe,
and transmission media between the camera and an evaluating and/or reproducing unit,
**characterised**
**in that** at least three rotatable exit nozzles (3.0) for the medium are arranged on the periphery of the base body (1.0) between the front and rear end thereof, the jet axis of the medium being inclined at an angle of 0° to 45° from the longitudinal centre axis between the front and rear end of the base body.

2. A device according to Claim 1,
**characterised**
**in that** there are four rotatable exit nozzles (3.0, 3.0'), the axes of rotation of which are each offset at 90° to one another transversely of the longitudinal centre axis of the base body.

3. A device according to Claim 1 or 2,
**characterised**
**in that** the exit nozzles are rotatable in a radius of 360°.

4. A device according to any one of the preceding Claims,
**characterised in that** the rotatable exit nozzles are operated by at least one electrical servomotor (4.0).

5. A device according to Claim 4,
**characterised**
**in that** a control and power supply cable is arranged between the servomotor (4.0) and a control unit.

6. A device according to any one of Claims 2 to 5,
**characterised**
**in that** the rotatable exit nozzles (3.0, 3.0') are disc-shape or flat cone-shape and are mounted so as to be rotationally fixed on shafts arranged at right angles to one another, the exit openings (3.3) of the said nozzles each being arranged on the periphery of the disc or of the flat cone.

7. A device according to Claim 6,
**characterised**
**in that** the shafts (2.0) are hollow shafts (2.1) for the transport of the medium from the flexible supply line to the exit nozzles.

8. A device according to Claim 7,
**characterised**
**in that** the jet axes of the medium from the exit openings (3.3) are each aligned with the longitudinal centre axes of the hollow shafts.

9. A device according to any one of Claims 5 to 8,
**characterised**
**in that** the probe is equipped with a gyrometer.

10. A device according to any one of the preceding Claims,
**characterised**
**in that**, as well as the camera, other testing instruments, measuring instruments and/or sensors are arranged in or on the base body.

11. A method for inspecting hollow spaces such as pipes, conduits, structures or receptacles,
consisting of the steps:
connecting a probe according to Claims 1 to 10 by means of a flexible supply line to a supply unit with a fluid or gaseous medium,
introducing the probe into the hollow space to be inspected,
acting upon the probe with a pressurized medium,
controlling the rotatable nozzles via the control cable so that, on the one hand, the probe is held in free space and, on the other hand, a reactive force is produced,
advancing the probe into the particular hollow space concerned and
evaluating the results.

## Revendications

1. Dispositif d'inspection d'espaces creux tels que des tubes, des canaux, des édifices ou des récipients, se composant :
d'une sonde constituée d'un corps de base (1.0) présentant une extrémité avant et une extrémité arrière qui possède une caméra intégrée (5.0) dont l'objectif est dirigé vers l'extrémité avant du corps de base (1.0),
d'une conduite d'amenée en forme de tuyau qui est destinée à un fluide liquide ou gazeux et qui est raccordée à l'extrémité arrière du corps de base de la sonde,
d'une unité d'alimentation de la conduite d'amenée en forme de tuyau située à l'extérieur de l'emplacement d'insertion de la sonde,
d'au moins une buse de sortie (3.0) destinée au fluide au niveau de la sonde,
ainsi que de moyens de transmission entre la caméra et une unité d'exploitation et/ou d'enregistrement,
caractérisé dans ce que au moins trois buses de sortie tournantes (3.0) destinées au fluide sont agencées à la périphérie du corps de base (1.0) entre son extrémité avant et son extrémité arrière, l'axe de projection du fluide faisant un angle compris entre 0 et 45° par rapport à l'axe médian longitudinal entre l'extrémité avant et l'extrémité arrière du corps de base.

2. Dispositif selon la revendication 1, **caractérisé en ce qu'**il est prévu quatre buses de sortie tournantes (3.0, 3.0') dont les axes de rotation sont décalés à chaque fois de 90° transversalement à l'axe médian longitudinal du corps de base.

3. Dispositif selon la revendication 1 ou 2, **caractérisé en ce que** les buses de sortie sont aptes à tourner sur 360°.

4. Dispositif selon l'une des revendications précédentes, **caractérisé en ce que** les buses de sortie tournantes sont entraînées par au moins un servomoteur électrique (4.0).

5. Dispositif selon la revendication 4, **caractérisé en ce qu'**un câble de commande et d'alimentation est agencé entre le servomoteur (4.0) et une unité de commande.

6. Dispositif selon l'une des revendications 2 à 5, **caractérisé en ce que** les buses de sortie tournantes (3.0, 3.0') ont une forme de disque ou de cône aplati et sont montées fixes en rotation sur des axes agencés perpendiculairement entre eux, leurs ouvertures de sortie (3.3) étant agencées à chaque fois sur la périphérie du disque ou du cône aplati.

7. Dispositif selon la revendication 6, **caractérisé en ce que** les axes (2.0) sont des axes creux (2.1) destinés au transport du fluide de la conduite d'amenée en forme de tuyau aux buses de sortie.

8. Dispositif selon la revendication 7, **caractérisé en ce que** les axes de pulvérisation du fluide par les ouvertures de sortie (3.3) sont orientés à chaque fois vers les axes médians longitudinaux des axes creux.

9. Dispositif selon l'une des revendications 5 à 8, **caractérisé en ce que** la sonde est équipée d'un gyromètre.

10. Dispositif selon l'une des revendications précédentes, **caractérisé en ce que**, en plus de la caméra, d'autres appareils de mesure et de test et/ou d'autres capteurs sont agencés dans ou sur le corps de base.

11. Procédé d'inspection d'espaces creux tels que des tubes, des canaux, des édifices ou des récipients, comprenant les étapes consistant à :
raccorder une sonde selon les revendications 1 à 10 au moyen d'une conduite d'amenée en forme de tuyau à une unité d'alimentation en fluide liquide ou gazeux,
introduire la sonde dans un espace creux à inspecter,
alimenter la sonde en fluide sous pression,
commander les buses tournantes au moyen du câble de commande de façon à maintenir d'une part la sonde dans l'espace libre et à générer d'autre part une force de recul,
faire avancer la sonde dans l'espace creux correspondant et exploiter les résultats.
